# EUROPÄISCHE PATENTSCHRIFT

(11) **EP 1 200 259 B1**
(45) Veröffentlichungstag und Bekanntmachung des Hinweises auf die Patenterteilung: **06.10.2004**
(21) Anmeldenummer: 00954448.7
(22) Anmeldetag: 07.07.2000
(51) Int. Cl.: B32B 31/12, B32B 7/10, B29D 9/00

(54) **VERFAHREN ZUM UMFORMEN EINES FLÄCHIGEN KUNSTSTOFFTEILS**
METHOD FOR DEFORMING A FLAT PLASTIC PART
PROCEDE POUR DEFORMER UNE PIECE EN MATIERE PLASTIQUE PLATE

(30) Priorität: 14.07.1999 DE 19932788
(43) Veröffentlichungstag der Anmeldung: 02.05.2002
(73) Patentinhaber: Volkswagen Aktiengesellschaft, 38436 Wolfsburg (DE)
(72) Erfinder: ROESSLER, Friedemann, D-38547 Calberlah (DE); HEROLD, Klaus-Peter, D-38165 Lehre (DE); RIECK, Klaus, D-38108 Braunschweig (DE)
(74) Vertreter: Schneider, Henry, Dipl.-Ing.
(86) Internationale Anmeldenummer: PCT/EP2000/006482
(87) Internationale Veröffentlichungsnummer: WO 2001/003925

(56) Entgegenhaltungen:
- EP-A- 0 636 474
- EP-A- 0 676 281
- DE-A- 3 822 471
- DE-A- 4 016 210
- DE-A- 19 703 505

## Beschreibung

Die vorliegende Erfindung betrifft ein Verfahren gemäß dem Oberbegriff des Anspruchs 1.

Durch immer höher werdende Anforderungen an die Lackierung im Automobilbau werden die Lacksysteme immer aufwendiger. Gleichzeitig ist auch dem Umweltschutz Rechnung zu tragen, das heißt bei der Lackierung von Karosserien sollen möglichst wenig Lösungsmittel freigesetzt werden. Hinzu kommt, dass die Rohkarosserien selbst durch Einsatz von Aluminiumteilen, Kunststoffteilen, wie beispielsweise Glasfaserkunststoff- oder Kohlefaserteilen, aus einem Materialmix bestehen, der in der Regel nur durch den Einsatz sehr dicker Lackschichten, beispielsweise von Füllerschichten und gegebenenfalls auch nur durch Anschleifen von Zwischenschichten sauber lackierbar ist. So bleiben beispielsweise Ziehfiguren auf preiswerteren umgeformten Aluminiumblechen nach einer gewöhnlichen Lackierung sichtbar, so dass in Sichtbereichen nur kostenintensive Aluminiumbleche eingesetzt werden können. Bei der Verwendung von Glasfaser- oder Kohlefaserkunststoffteilen muss die Faserstruktur durch eine verhältnismäßig dicke Füllerschicht, die gegebenenfalls anzuschleifen ist, überdeckt werden, damit deren Struktur nicht durch die Lackschicht hindurch sichtbar bleibt. Auch andere Oberflächenfehler, wie Walzstrukturen oder Bearbeitungsfehler aus dem Rohbau und dem Presswerk müssen im Allgemeinen durch einen erheblichen Aufwand im Rohbaufinish eliminiert werden.

Aus der DE 197 03 505.1 A ist ein farbiges Karosserieteil bekannt, das mit einem umgeformten flächigen Kunststoffteil überzogen ist. Grundsätzlich löst dieses farbige Karosserieteil die oben beschriebene Problematik, die Umsetzung dieses bekannten farbigen Karosserieteils in die Serie gestaltet sich jedoch schwierig, da das bekannte farbige Karosserieteil in sehr engen Grenzen der Prozessparameter herzustellen ist. Sobald diese engen Grenzen verlassen werden, nimmt die Qualität des Kunststoffteils deutlich ab. Beim Vakuumtiefziehen von Folien mit lackierter Oberfläche treten schon bei relativ geringen Umformgraden erhebliche Verluste des Glanzgrades auf, sofern diese Folien nicht im sogenannten Folienhinterspritzverfahren mit einem Kunststoff hinterspritzt werden. Beim Hinterspritzen der Folie mit einem Kunststoff wird die Folie unter hohem Druck und Temperatur von der plastischen Kunststoffmasse mit ihrer Sichtseite gegen eine hochglanzpolierte Werkzeugoberfläche gepresst und übernimmt dabei ihre Eigenschaften (Hochglanz, Strukturfreiheit). Diesen Druck und diese. Temperatur kann man bei den üblichen Vakuumtiefziehoperationen, die bei einer Folienumformung ohne Hinterspritzen angewandt werden, nicht erreichen. Ein Pressen der Folie erlaubt nicht die gewünschte feine Konturierung.

Das Hinterspritzen von flächigen Kunststoffteilen mit unpolaren Werkstoffen wie zum Beispiel Polypropylen, expandierendem Polypropylen oder Ethylen/Propylen-Dien-Terpolymeren war jedoch bislang nicht möglich, da keine ausreichende Haftung dieser unpolaren Werkstoffe auf der überwiegend polaren zu hinterspritzenden Schicht des flächigen Kunststoffteils erzielt werden konnte.

Aufgabe der vorliegenden Erfindung ist es daher, ein Verfahren zur Herstellung eines Bauteils zu schaffen, das wenigstens eine Farbschicht aufweist, ausgehend von einem flächigen Kunststoffteil, bei dem eine einwandfreie Verbindung (Haftung) zwischen der Schicht aus dem vorzugsweise unpolaren Trägermaterial und der dieser zugewandten Schicht des ursprünglichen flächigen Kunststoffteils erzielt wird.

Diese Aufgabe wird gelöst durch ein Verfahren der eingangs genannten Gattung mit den kennzeichnenden Merkmalen des Anspruchs 1.

Das erfindungsgemäße Verfahren hat den Vorteil, dass es ermöglicht, Schichten aus relativ preiswerten unpolaren Trägerwerkstoffen, beispielsweise Polyolefinen, mit höherwertigen Finish-Schichten dauerhaft zu verbinden, auch wenn letztere polare Anteile aufweisen.

Erfindungsgemäß wird von einem flächigen Kunststoffteil ausgegangen, das die genannte höherwertige Finish-Schicht des herzustellenden Bauteils umfasst. Vorzugsweise erfolgt das Aufbringen der die preiswertere Schicht aus dem unpolaren Trägermaterial bildenden Schicht durch Hinterspritzen oder Hinterschäumen des flächigen Kunststoffteils. Im Rahmen der vorliegenden Erfindung ist es aber auch möglich, von einer höherwertigen Schicht aus einem unpolaren Kunststoff, beispielsweise einer durchgefärbten Polypropylenfolie, auszugehen und auf diese einen polaren Kunststoff als Trägermaterial aufzubringen, beispielsweise durch Spritzgießen oder ähnliche Verfahren. Auch bei dieser Variante geht es darum, eine höherwertige Finish-Schicht mit einer in der Regel preisgünstigeren Trägerschicht zu verbinden, die eine damit nicht ohne Weiteres kompatible Werkstoffformulierung aufweist, wobei hier lediglich umgekehrt als bei der ersten Variante das die Farbschicht umfassende flächige Kunststoffteil eine Schicht aus überwiegend unpolarem Kunststoff aufweist und die damit zu verbindende Trägerschicht aus einem überwiegend polaren Kunststoff besteht.

Gemäß der Erfindung wird vor dem Beaufschlagen des flächigen Kunststoffteils, von dem ausgegangen wird, mit dem Kunststoff, der die spätere Trägerschicht bildet, auf die beaufschlagte Seite des flächigen Kunststoffteils ein Primer aufgebracht. Vorzugsweise verwendet man ein Primer auf Kautschukbasis. Beispielsweise kommt hierzu ein Primer der Firma Kömmerling in Betracht, der unter den Bezeichnungen Corabond PR 623 oder PR 262 im Handel ist, der sich im Rahmen des erfindungsgemäßen Verfahrens als besonderes geeignet erwiesen hat. Das unmittelbare Hinterspritzen oder Hinterschäumen eines flächigen Kunststoffteils der eingangs genannten Art mit einem unpolaren Kunststoff, der dann die Trägerschicht bildet, ohne Verwendung eines solchen Haftprimers ist dagegen, wie sich gezeigt hat, nicht möglich.

Die Aufbringung des erfindungsgemäßen Primers auf die zu beaufschlagende Rückseite des flächigen Kunststoffteils erfolgt vorzugsweise vor dem Arbeitsgang des Beaufschlagens des flächigen Kunststoffteils, das heißt zum Beispiel bei der Herstellung des flächigen Kunststoffteils. Es wird vermutet, dass dann die Polarisation bei Verwendung eines unpolaren Trägerstoffes unmittelbar beim Spritzgießen (Hinterspritzen) erfolgt. Eine weitere Vorbehandlung des flächigen Kunststoffteils oder eine Zugäbe weiterer Haftvermittler beim Hinterspritzen ist daher in der Regel nicht notwendig.

Gemäß einer möglichen bevorzugten Variante des erfindungsgemäßen Verfahrens kann man einen Arbeitsgang vorsehen, in dem man das flächige Kunststoffteil vorumformt und der Primer kann vor oder nach diesem Vorumformvorgang auf das flächige Kunststoffteil aufgebracht werden.

Gemäß einer weiteren möglichen bevorzugten Variante des erfindungsgemäßen Verfahrens wird das flächige Kunststoffteil extrudiert, und der Primer kann auf das flächige Kunststoffteil nach der Extrusion, vorzugsweise noch auf der Haspel, aufgebracht werden.

Gemäß einer weiteren bevorzugten Variante des Verfahrens kann man auf das flächige Kunststoffteil vor dem Beaufschlagen mit dem Kunststoff eine vorzugsweise unpolare Vermittlerfolie aufbringen und zwar vorzugsweise unter Anwendung von Druck und/oder Wärme und diese dann hinterspritzen oder hinterschäumen.

Das flächige Kunststoffteil, von dem im Rahmen der vorliegenden Erfindung ausgegangen wird und das die oben genannte Finish-Schicht bildet, umfasst vorzugsweise wenigstens eine Farbschicht und wenigstens eine Klarschicht. Diese Farbschicht kann beispielsweise ein durchgefärbtes Acrylnitril-Styrol-Acrylester-Copolymeres umfassen. Die Klarschicht dieses flächigen Kunststoffteils umfasst vorzugsweise ein Polytetrafluorethylen oder ein Polycarbonat.

Gemäß einer Weiterbildung der Erfindung ist vorgesehen, dass das flächige Kunststoffteil neben wenigstens einer Farbschicht und wenigstens einer Klarschicht (Transparentschicht) wenigstens eine weitere Schicht umfasst, vorzugsweise eine Schicht aus eingefärbtem Polytetrafluorethylen. Vorzugsweise ist eine Schicht des Kunststoffteils mit Metallicpartikeln eingefärbt und zwar vorzugsweise eine Schicht, die aus eingefärbtem Polytetrafluorethylen oder einem ähnlichen Kunststoff mit vergleichbaren Eigenschaften besteht. Ein solches mehrschichtiges flächiges Kunststoffteil im Sinne der Erfindung kann beispielsweise durch Koextrusion hergestellt werden. Die Materialstärke eines solchen flächigen Kunststoffteils insgesamt ist vorzugsweise relativ gering, so dass man ein solches Kunststoffteil als Folie definieren würde. Beispielsweise liegt die gesamte Materialstärke eines solchen flächigen Kunststoffteils, von dem man in dem erfindungsgemäßen Verfahren ausgeht, im mm-Bereich oder ist geringer als 1mm.

Bevorzugte Bereiche für die Schichtdicken der einzelnen Schichten des flächigen Kunststoffteils sind für die Farbschicht 30 bis 5.000 µm, vorzugsweise zwischen 300 und 500 µm und für die Klarschicht 30 bis 300 µm, vorzugsweise 50 bis 200 µm. Die Schichtdicke der Trägerschicht, die durch Beaufschlagen des flächigen Kunststoffteils mit dem vorzugsweise polaren Trägerkunststoff erzeugt wird, das heißt vorzugsweise durch Hinterspritzen oder Hinterschäumen, ist nicht kritisch. Es ist zu erwähnen, dass es sich bei dem erfindungsgemäßen flächigen Kunststoffteil um farbige Folien handeln kann, die verglichen mit anderen farbigen Folien herkömmlicher Art eine erhöhte Schichtdicke der funktionalen Schichten hat. Bei einer solchen bevorzugten hohen Farbschichtdicke kann in dem erfindungsgemäßen Verfahren auch ein hoher Umformgrad erzielt werden.

## Patentansprüche

1. Verfahren zur Herstellung eines Bauteils, das wenigstens eine Farbschicht aufweist, ausgehend von einem flächigen, die wenigstens eine Farbschicht aufweisenden Kunststoffteil, umfassend die Schritte:
Einbringen des flächigen Kunststoffteils in ein formbestimmendes Werkzeug;
Beaufschlagen einer Seite des flächigen Kunststoffteils mit einem Kunststoff unter Druck und bei erhöhter Temperatur und unter Erwärmung des flächigen Kunststoffteils und
Pressen des erhitzten flächigen Kunststoffteils mit der von der mit dem Kunststoff beaufschlagten Seite abgewandten Seite gegen das formbestimmende Werkzeug;
**gekennzeichnet durch** den Schritt:
Aufbringen eines Haftvermittlers auf die mit dem Kunststoff zu beaufschlagende Seite des flächigen Kunststoffteils vor dem Beaufschlagen.

2. Verfahren nach Anspruch 1, **dadurch gekennzeichnet, dass** die mit dem Kunststoff zu beaufschlagende Seite des flächigen Kunststoffteils und das flächige Kunststoffteil voneinander abweichende Polaritäten aufweisen.

3. Verfahren nach Anspruch 1 oder 2, **dadurch gekennzeichnet, dass** das flächige Kunststoffteil mit einem Schaumstoff beaufschlagt (hinterschäumt) wird.

4. Verfahren nach einem der Ansprüche 1 bis 3, **dadurch gekennzeichnet, dass** der Kunststoff, mit dem das flächige Kunststoffteil beaufschlagt wird, ein Polyolefin, vorzugsweise Polypropylen oder ein Ethylen/Propylen-Dien-Terpolymer oder ein Gemisch der beiden vorgenannten Kunststoffe oder ein Schaum aus expandierendem Polypropylen ist.

5. Verfahren nach einem der Ansprüche 1 bis 4, **dadurch gekennzeichnet, dass** ein Haftvermittler auf Kautschukbasis verwendet wird.

6. Verfahren nach einem der Ansprüche 1 bis 5, **dadurch gekennzeichnet, dass** ein Arbeitsgang vorgesehen ist, in dem das flächige Kunststoffteil vorumgeformt wird und der Haftvermittler vor oder nach diesem Vorumformvorgang auf das flächige Kunststoffteil aufgebracht wird.

7. Verfahren nach einem der Ansprüche 1 bis 6, **dadurch gekennzeichnet, dass** das flächige Kunststoffteil extrudiert wird und der Haftvermittler auf das flächige Kunststoffteil nach der Extrusion, vorzugsweise noch auf der Haspel, aufgebracht wird.

8. Verfahren nach Anspruch 2, **dadurch gekennzeichnet, dass** auf das polare flächige Kunststoffteil vor dem Beaufschlagen mit dem unpolaren Kunststoff eine unpolare Vermittlerfolie aufgebracht wird, vorzugsweise unter Anwendung von Druck und/oder Wärme.

9. Verfahren nach einem der Ansprüche 1 bis 8, **dadurch gekennzeichnet, dass** das flächige Kunststoffteil wenigstens eine Farbschicht und wenigstens eine Klarschicht aufweist.

10. Verfahren nach einem der Ansprüche 1 bis 9, **dadurch gekennzeichnet, dass** die Farbschicht ein durchgefärbtes Acrylnitril-Styrol-Acrylester-Copolymer umfasst.

11. Verfahren nach einem der Ansprüche 1 bis 10, **dadurch gekennzeichnet, dass** das flächige Kunststoffteil neben wenigstens einer Farbschicht und wenigstens einer Klarschicht (Transparentschicht) eine weitere Schicht, vorzugsweise aus eingefärbtem Polytetrafluorethylen umfasst.

12. Verfahren nach einem der Ansprüche 1 bis 11, **dadurch gekennzeichnet, dass** wenigstens eine Klarschicht des flächigen Kunststoffteils ein Polytetrafluorethylen oder ein Polycarbonat umfasst.

13. Verfahren nach einem der Ansprüche 1 bis 12, **dadurch gekennzeichnet, dass** die Schichtdicke der Farbschicht 30 bis 5.000 µm, vorzugsweise zwischen 300 und 500 µm beträgt.

14. Verfahren nach einem der Ansprüche 1 bis 13, **dadurch gekennzeichnet, dass** die Schichtdicke der Klarschicht 30 bis 300 µm, vorzugsweise 50 bis 200 µm beträgt.

15. Verfahren nach einem der Ansprüche 1 bis 14, **dadurch gekennzeichnet, dass** das flächige Kunststoffteil wenigstens eine Schicht umfasst, die mit Metallicpartikeln eingefärbt ist.

16. Verfahren nach einem der Ansprüche 1 bis 15, **dadurch gekennzeichnet, dass** das flächige Kunststoffteil eine im Koextrusionsverfahren hergestellte Folie ist.

17. Verfahren nach einem der Ansprüche 1 bis 16, **dadurch gekennzeichnet, dass** das flächige Kunststoffteil wenigstens eine Schicht aus einem durchgefärbten Polypropylen umfasst.

18. Verfahren nach einem der Ansprüche 1 bis 17, **dadurch gekennzeichnet, dass** der Kunststoff, mit dem das flächige Kunststoffteil beaufschlagt wird, polar ist und das flächige Kunststoffteil unpolar.

19. Verfahren nach Anspruch 18, **dadurch gekennzeichnet, dass** der Kunststoff, mit dem das flächige Kunststoffteil beaufschlagt wird, ein Acrylnitril-Butadien-Styrol (ABS) ist.

20. Verfahren nach einem der Ansprüche 1 bis 17, **dadurch gekennzeichnet, dass** der Kunststoff, mit dem das flächige Kunststoffteil beaufschlagt wird, unpolar ist und die zu beaufschlagende Seite des flächigen Kunststoffteils aus einem im Wesentlichen polaren Kunststoff besteht.

## Claims

1. Method for the manufacture of a structural component, which comprises at least one colouring layer, starting from a flat synthetic-material part comprising the at least one colouring layer, with the following steps:
- placing the flat synthetic-material part into a form-determining tool;
- charging one side of the flat synthetic-material part with a synthetic material under pressure, at increased temperature and during heating of the flat synthetic-material part, and then pressing the heated, flat synthetic-material part with the side facing away from the side charged with the synthetic material against the form-determining tool;
**characterised by** the stage:
- applying an adhesion promoter to the side of the flat synthetic-material part to be charged with the synthetic material before charging.

2. Method according to claim 1, **characterised in that** the side of the flat synthetic-material part to be charged with the synthetic material and the flat synthetic-material part itself differ in polarity relative to one another.

3. Method according to claim 1 or 2, **characterised in that** the flat synthetic-material part is charged with a foamed material (back-foamed).

4. Method according to any one of claims 1 to 3,
**characterised in that** the synthetic material, with which the flat synthetic-material part is charged, is a polyolefin, preferably polypropylene or an ethylene-propylene-diene-terpolymer or a mixture of the two above-named synthetic materials or a foam made from expanded polypropylene.

5. Method according to any one of claims 1 to 4,
**characterised in that** an adhesion promoter based on rubber is used.

6. Method according to any one of claims 1 to 5,
**characterised in that** an operational stage is provided, wherein the flat synthetic-material part is pre-formed, and the adhesion promoter is applied to the flat synthetic-material part before or after this pre-forming stage.

7. Method according to any one of claims 1 to 6,
**characterised in that** the flat synthetic-material part is extruded and the adhesion promoter is applied to the flat synthetic-material part after the extrusion, preferably while still on the reel.

8. Method according to claim 2, **characterised in that** a non-polar promoter film is applied to the polar, flat synthetic-material part before charging with the non-polar synthetic material, preferably while applying pressure and/or heat.

9. Method according to any one of claims 1 to 8,
**characterised in that** the flat synthetic-material part comprises at least one colouring layer and at least one clear layer.

10. Method according to any one of claims 1 to 9,
**characterised in that** the colouring layer comprises a thoroughly-coloured acrylonitrile styrene acrylic ester copolymer.

11. Method according to any one of claims 1 to 10,
**characterised in that**, in addition to the at least one colouring layer and at least one clear layer (transparent layer), the flat synthetic-material part comprises a further layer, preferably made from coloured polytetrafluoroethylene.

12. Method according to any one of claims 1 to 11,
**characterised in that** the at least one clear layer of the flat synthetic-material part comprises a polytetrafluoroethylene or a polycarbonate.

13. Method according to any one of claims 1 to 12,
**characterised in that** the layer thickness of the colouring layer is 30 to 5000 µm, preferably between 300 and 500 µm.

14. Method according to any one of claims 1 to 13,
**characterised in that** the layer thickness of the clear layer is 30 to 300 µm, preferably 50 to 200 µm.

15. Method according to any one of claims 1 to 14,
**characterised in that** the flat synthetic-material part comprises at least one layer, which is coloured with metallic particles.

16. Method according to any one of claims 1 to 15,
**characterised in that** the flat synthetic-material part is a film manufactured using a co-extrusion process.

17. Method according to any one of claims 1 to 16,
**characterised in that** the flat synthetic-material part comprises at least one layer made from a thoroughly-coloured polypropylene.

18. Method according to any one of claims 1 to 17,
**characterised in that** the synthetic material, with which the flat synthetic-material part is charged, is polar and that the flat synthetic-material part is non-polar.

19. Method according to claim 18, **characterised in that** the synthetic material, with which the flat synthetic-material part is charged, is an acrylonitrile-butadiene-styrene (ABS).

20. Method according to any one of claims 1 to 17,
**characterised in that** the synthetic material, with which the flat synthetic-material part is charged, is non-polar and that the side of the flat synthetic-material part to be charged consists of an essentially polar synthetic material.

## Revendications

1. Procédé destiné à la fabrication d'un composant, comportant au moins une couche de peinture, à partir d'une pièce plate en matière plastique pourvue d'au moins une couche de peinture, comprenant les phases suivantes :
introduction de la pièce plate en matière plastique dans un outil de détermination de forme ;
application sous pression et à température accrue, et en chauffant la pièce plate en matière plastique, d'une matière plastique sur une face de la pièce plate en matière plastique, et pressage de la pièce plate en matière plastique chauffée par la face opposée à la face sur laquelle est appliquée la matière plastique contre l'outil de définition de forme ;
**caractérisé par la phase :**
dépose d'un agent adhésif sur la face de la pièce plate en matière plastique sur laquelle doit être appliquée la matière plastique avant l'application.

2. Procédé selon la revendication 1, **caractérisé en ce que** la face de la pièce plate en matière plastique sur laquelle doit être appliquée la matière plastique et la pièce plate en matière plastique présentent des polarités différentes.

3. Procédé selon la revendication 1 ou 2, **caractérisé en ce qu'**une mousse est appliquée (application par l'arrière) sur la pièce plate en matière plastique.

4. Procédé selon l'une quelconque des revendications 1 à 3, **caractérisé en ce que** la matière plastique qui est appliquée sur la pièce plate en matière plastique est une polyoléfine, de préférence un polypropylène ou un terpolymère d'éthylène / propylène-diène ou un mélange des deux matières plastiques précitées ou une mousse en polypropylène expansé.

5. Procédé selon l'une quelconque des revendications 1 à 4, **caractérisé en ce qu'**il est utilisé un agent adhésif à base de caoutchouc.

6. Procédé selon l'une quelconque des revendications 1 à 5, **caractérisé en ce qu**'il est prévu une phase de travail au cours de laquelle la pièce plate en matière plastique est préformée, et en ce que l'agent adhésif est appliqué sur la pièce plate en matière plastique avant ou après ce processus de préformage.

7. Procédé selon l'une quelconque des revendications 1 à 6, **caractérisé en ce que** la pièce plate en matière plastique est extrudée, et **en ce que** l'agent adhésif est appliqué après l'extrusion sur la pièce plate en matière plastique, de préférence encore sur la bobineuse.

8. Procédé selon la revendication 2, **caractérisé en ce que**, avant l'application de la matière plastique non polaire, un film d'adhérence non polaire est appliqué sur la pièce plate en matière plastique non polaire, de préférence par utilisation de pression et/ou de chaleur.

9. Procédé selon l'une quelconque des revendications 1 à 8, **caractérisé en ce que** la pièce plate en matière plastique comporte au moins une couche de peinture et une couche transparente.

10. Procédé selon l'une quelconque des revendications 1 à 9, **caractérisé en ce que** la couche de peinture contient un copolymère d'acrylonitrile-styrène-acrylester teinté dans la masse.

11. Procédé selon l'une quelconque des revendications 1 à 10, **caractérisé en ce que**, outre au moins une couche de peinture et au moins une couche transparente (couche translucide), la pièce plate en matière plastique comporte une autre couche, de préférence en polytétrafluoroéthylène teinté.

12. Procédé selon l'une quelconque des revendications 1 à 11, **caractérisé en ce qu'**au moins une couche transparente de la pièce plate en matière plastique contient un polytétrafluoroéthylène ou un polycarbonate.

13. Procédé selon l'une quelconque des revendications 1 à 12, **caractérisé en ce que** l'épaisseur de couche de la couche de peinture est de 30 à 5000 µm, et est de préférence comprise entre 300 et 500 µm.

14. Procédé selon l'une quelconque des revendications 1 à 13, **caractérisé en ce que** l'épaisseur de couche de la couche transparente est de 30 à 300 µm, et est de préférence de 50 à 200 µm.

15. Procédé selon l'une quelconque des revendications 1 à 14, **caractérisé en ce que** la pièce plate en matière plastique comporte au moins une couche qui est teintée avec des particules métalliques.

16. Procédé selon l'une quelconque des revendications 1 à 15, **caractérisé en ce que** la pièce plate en matière plastique est un film fabriqué selon un procédé de co-extrusion.

17. Procédé selon l'une quelconque des revendications 1 à 16, **caractérisé en ce que** la pièce plate en matière plastique comporte au moins une couche en un polypropylène teinté dans la masse.

18. Procédé selon l'une quelconque des revendications 1 à 17, **caractérisé en ce que** la matière plastique qui est appliquée sur la pièce plate en matière plastique est polaire, et **en ce que** la pièce plate en matière plastique est non polaire.

19. Procédé selon la revendication 18, **caractérisé en ce que** la matière plastique qui est appliquée sur la pièce plate en matière plastique est un acrylonitrile-butadiène-styrène (ABS).

20. Procédé selon l'une quelconque des revendications 1 à 17, **caractérisé en ce que** la matière plastique qui est appliquée sur la pièce plate en matière plastique est non polaire, et **en ce que** la face de la pièce plate en matière plastique sur laquelle elle doit être appliquée est en une matière plastique sensiblement polaire.
